# EUROPEAN PATENT SPECIFICATION

(11) **EP 3 800 027 B1**
(45) Date of publication and mention of the grant of the patent: **15.05.2024**
(21) Application number: 20156310.3
(22) Date of filing: 10.02.2020
(51) Int. Cl.: B29C 44/00, B29C 64/00

(54) **THREE-DIMENSIONAL PRINTED THERMAL EXPANSION STRUCTURE AND MANUFACTURING METHOD OF THE SAME**
DREIDIMENSIONALE GEDRUCKTE WÄRMEDEHNUNGSSTRUKTUR UND HERSTELLUNGSVERFAHREN DAFÜR
STRUCTURE DE DILATATION THERMIQUE IMPRIMÉE EN TROIS DIMENSIONS ET SON PROCÉDÉ DE FABRICATION

(30) Priority: 04.10.2019 TW 108136089
(43) Date of publication of application: 07.04.2021
(73) Proprietor: Feng Tay Enterprises Co., Ltd., Douliu City, Yunlin County 640111 (TW); Bauer Hockey Ltd., Blainville, Québec J7C 0N9 (CA)
(72) Inventor: SU, Chin-Te, 640 Douliu City, Yunlin County (TW); LAPERRIERE, Jean-Francois, Prevost, Quebec, J0R 1H0 (CA); KRICK, Thierry, Coteau-du-lac, Quebec, J0P 1B0 (CA); ASSELIN, Francois, Blainville, Quebec, J7C 5P6 (CA); LADOUCEUR, Martin, Mirabel, Quebec, J7N 3B8 (CA); LABONTE, Ivan, Montreal, Quebec, H2S 2H3 (CA); BEAUREGARD, Marco, Gore, Quebec, J0V 1K0 (CA)
(74) Representative: Viering, Jentschura & Partner mbB Patent- und Rechtsanwälte

(56) References cited:
- WO-A1-2018/157148
- WO-A1-2018/183803
- US-A1- 2018 345 575

## Description

### BACKGROUND OF THE INVENTION

### Technical Field

The present invention relates generally to a three-dimensional printed structure, and more particularly to a three-dimensional printed thermal expansion structure and a manufacturing method of the same.

### Description of Related Art

US 2018/345575 A1 discloses additive methods of manufacturing articles using foam particles, comprising: a thermoplastic material and a thermal expansion material, wherein the thermoplastic material and the thermal expansion material are mixed to form a mixed material. US 2018/345575 A1 utilizes a 3D printing apparatus to fuse a plurality of foam particles to form a structure. Then the structure could be compression molded in a closed mold under heat and pressure. As the technology develops, a range of application of a three-dimensional printing technique (hereinafter refer as to "3D printing technique") is wider and wider. For example, toys, daily commodities, tools, goods for car use, and even a large building could be printed by the 3D printing technique.

A method of additively manufacturing articles using foam particles is also described by WO2018/157148.

Although the 3D printing technique can produce a complicated structure without making molds, the 3D printing technique is restricted by a curing time, so that the production efficiency of the 3D printing technique is low and is not suitable for mass production. Therefore, when a large number of same products should be manufactured in a short period of time, according to the current technology, mass production still needs to be done by the conventional molding method of making molds. As a result, the cost of the mass-produced products couldn't be cut down effectively, and it is unable to make a product with a relatively complicated structure.

In conclusion, there is a need for the manufacturers to develop a structure applying the 3D printing technique which could achieve mass production and a manufacturing method of the same, in order to effectively promote the production efficiency of the 3D printing technique and produce products with complicated structure by utilizing the 3D printing technique.

### BRIEF SUMMARY OF THE INVENTION

In view of the above, the primary objective of the present invention is to provide a 3D printed thermal expansion structure which includes a mixed material that is a mixture of a thermoplastic material and a thermal expansion material. Make the mixed material into the 3D printed thermal expansion structure by utilizing a 3D printing apparatus and executing a heating process. In this way, the 3D printing apparatus could produce a product with a relatively complicated structure, and then a solid object which is formed by the 3D printing apparatus could expand proportionally during the heating process to form the 3D printed thermal expansion structure. Therefore, a manufacturing time for making the 3D printed thermal expansion structure could be reduced.

The present invention provides a 3D printed thermal expansion structure according to claim 1 and a manufacturing method according to claim 8. The dependent claims show further embodiments of said product and method, respectively.

With the aforementioned design, by utilizing the 3D printing apparatus to form the mixed material, which is a mixture of the thermoplastic material and the thermal expansion material, into the solid object, and by processing the heating process then, the solid object becomes the 3D printed thermal expansion structure. As a result, the 3D printing apparatus could manufacture the product with the relatively complicated structure, and the solid object could expand proportionally during the heating process to form the 3D printed thermal expansion structure. The method provided in the present invention not only could retain the advantage of printing the product with relatively complicated structure, but also could significantly reduce the manufacturing time of manufacturing mass products via 3D printing

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a flowchart, showing the manufacturing method of the 3D printed thermal expansion structure of an embodiment according to the present invention;
FIG. 2 is a schematic diagram, showing the solid object is printed by the 3D printing apparatus of the embodiment according to the present invention;
FIG. 3 is a schematic diagram, showing the solid object is heated by the heating apparatus of the embodiment according to the present invention;
FIG. 4 is a schematic diagram, showing the solid object is expanded to the 3D printed thermal expansion structure by using the heating apparatus of said embodiment according to the present invention;
FIG. 5 is a schematic diagram, showing a perspective view of the solid object of the embodiment according to the present invention;
FIG. 6 is a schematic diagram, showing a perspective view of the 3D printed thermal expansion structure of the embodiment according to the present invention;
FIG. 7 is a sectional view taken along the 7-7 line in FIG. 5; and
FIG. 8 is a sectional view taken along the 8-8 line in FIG. 6.

### DETAILED DESCRIPTION OF THE INVENTION

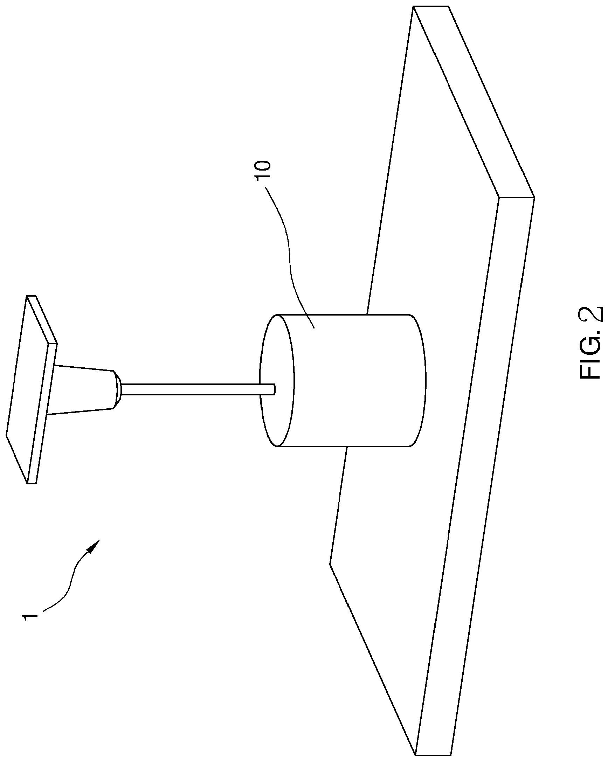

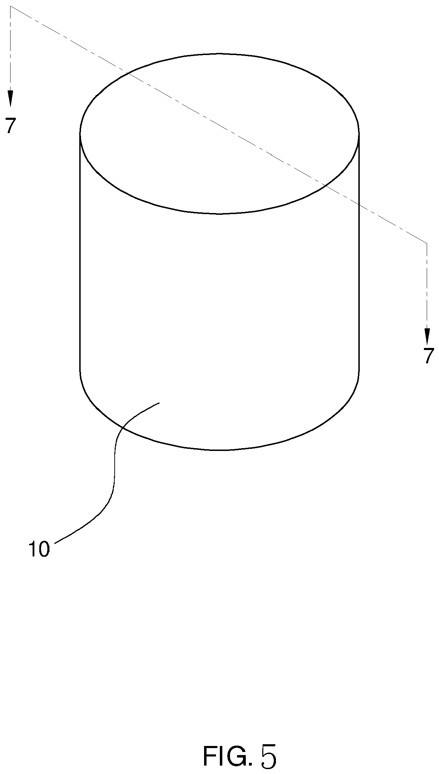

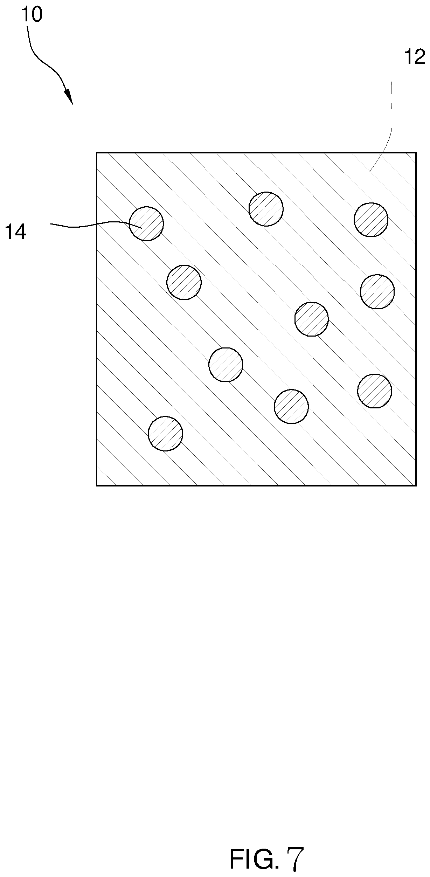

Referring to FIG. 1, FIG. 2, FIG. 5, and FIG. 7, FIG. 1 is a flowchart showing a manufacturing method of a three-dimensional printed thermal expansion structure (hereinafter refer as to "3D printed thermal expansion structure") 20 of an embodiment according to the present invention; FIG. 2 is a schematic diagram showing a solid object 10 is printed by a 3D printing apparatus 1 of the embodiment; FIG. 5 is a schematic diagram showing a perspective view of the solid object 10 of the embodiment; and FIG. 7 is a sectional view taken along the 7-7 line in FIG. 5.

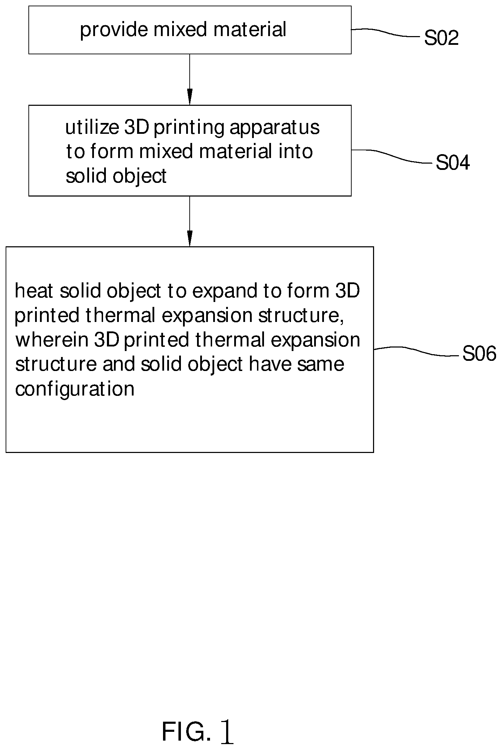

The manufacturing method of the 3D printed thermal expansion structure 20 illustrated in FIG. 1 includes at least following steps:
step S02: providing a mixed material;
step S04: utilizing the 3D printing apparatus 1 to form the mixed material into the solid object 10; and
step S06: heating the solid object 10, so that the solid object 10 expands to form the 3D printed thermal expansion structure 20, wherein the 3D printed thermal expansion structure 20 and the solid object 10 have a same configuration.

In the current embodiment, a 3D printing technique applied by the 3D printing apparatus 1 could be, but not limited to stereolithography apparatus (SLA), selective laser sintering (SLS), powder bed and inkjet head 3D printing (3DP), or fused deposition modeling (FDM).

As shown in FIG. 2, the solid object 10 includes a thermoplastic material 12 and a thermal expansion material 14, wherein the thermoplastic material 12 and the thermal expansion material 14 are mixed and formed the mixed material, and the mixed material is utilized by the 3D printing apparatus 1 to form the solid object 10. The thermoplastic material 12 accounts for 50-90 wt% of a weight of the solid object 10; the thermal expansion material 14 accounts for 10-50 wt% of the weight of the solid object 10.

In the current embodiment, the thermoplastic material 12 could be a stereolithographic material or a sinterable material, for example, but not limited to epoxy, acrylic acid, thermoplastic polyurethane (TPU), polyamide (PA), polypropylene (PP), polycarbonate (PC), or acrylonitrile butadiene styrene (ABS). In the current embodiment, the thermoplastic material 12 could be liquid or powder. If the thermoplastic material 12 is powder, the thermoplastic material 12 is pre-blended with a binder, and then is mixed with the thermal expansion material 14. In the current embodiment, if the thermoplastic material 12 and the thermal expansion material 14 are both liquid, the thermoplastic material 12 and the thermal expansion material 14 could be directly mixed; if the thermoplastic material 12 and the thermal expansion material 14 are both powder, the thermoplastic material 12 is pre-blended with the binder, and then is mixed with the thermal expansion material 14 in order to evenly mix the thermoplastic material 12 and the thermal expansion material 14. When a performance of 3D printing is not well, the thermoplastic material 12 and the thermal expansion material 14 could be kneaded in advance to obtain the mixed material, and then the mixed material is ground into a powder that is suitable for being used in the 3D printing apparatus 1. Alternatively, if the thermoplastic material 12 and the thermal expansion material 14 are liquid, the thermoplastic material 12 and the thermal expansion material 14 are sprayed in advance, and then are dried to form a powder that suitable for being used in the 3D printing apparatus 1.

In the current embodiment, the thermal expansion material 14 includes a closed-cell foam material, wherein the closed-cell foam material includes a plurality of foamable microcapsules, such as foamable microcapsules FN-78D (produced by Matsumoto Yushi-Seiyaku Co., Ltd.). In the current embodiment, a foamable raw material is pre-foamed to form the thermal expansion material 14. In the current embodiment, a volume of the thermal expansion material 14 is expanded in range of tenfold to fortyfold of a volume of the foamable raw material.

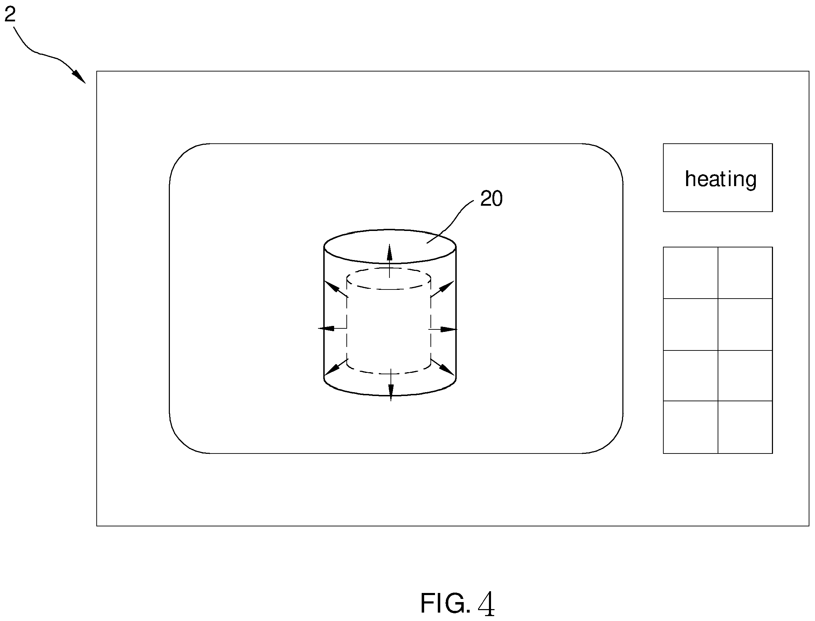

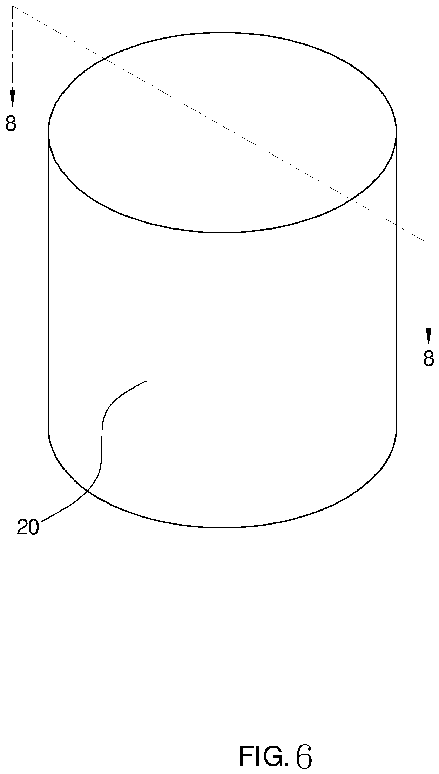

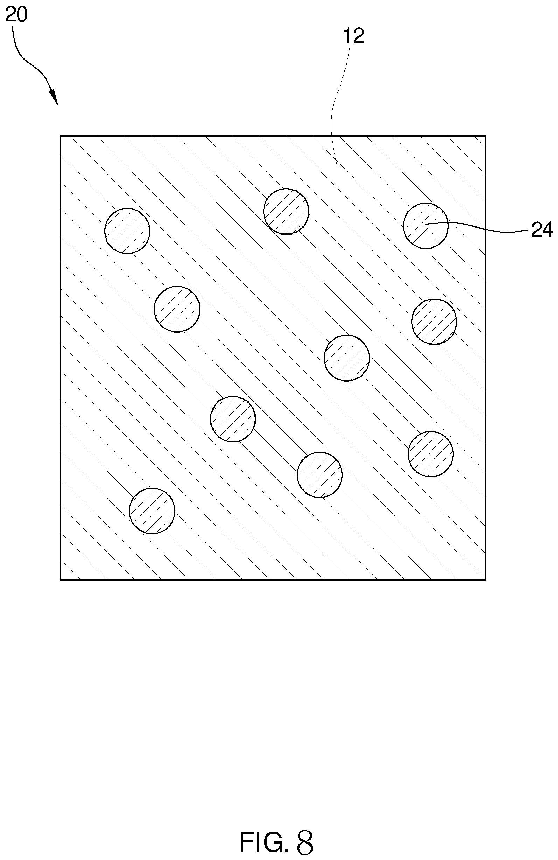

Referring to FIG. 3, FIG. 4, FIG. 6, and FIG. 8, FIG. 3 is a schematic diagram showing the solid object 10 is heated by a heating apparatus 2 of the embodiment according to present invention. FIG. 4 is a schematic diagram showing the solid object 10 is expanded to the 3D printed thermal expansion structure 20 by using the heating apparatus 2 of the said embodiment according to present invention. FIG. 6 is a schematic diagram showing a perspective view of the 3D printed thermal expansion structure 20 of the embodiment according to present invention. FIG. 8 is a sectional view taken along the 8-8 line in FIG. 6.

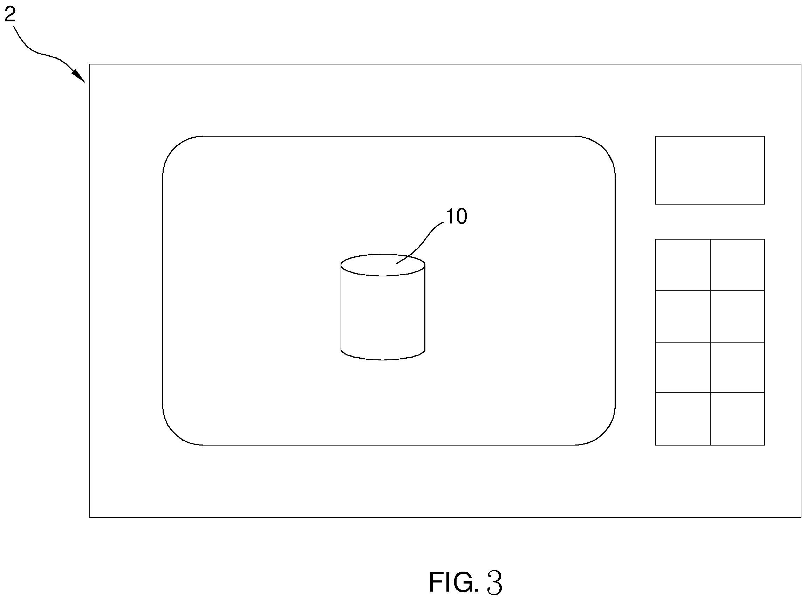

As shown in FIG. 3, the solid object 10 is provided into a heating apparatus 2. In the current embodiment, the heating apparatus 2 could be, but not limited to, a steamer, an oven, a microwave oven, or a laboratory oven. In other embodiments, the heating apparatus could be any apparatus which is able to heat the solid object 10. The thermal expansion material 14 in the solid object 10 is heated to expand to form a thermal expansion material 24 in the 3D printed thermal expansion structure 20. During the expansion process, a heating temperature, a power, and a heating time of the heating apparatus 2 need to be controlled, wherein the heating temperature of the heating apparatus 2 needs to be higher than an initial foaming temperature of the thermal expansion material 24 in order to foam the thermal expansion material 24 successfully. Once the heating temperature or the heating time of the heating apparatus 2 is controlled improperly, it is very possible to lead to defects that the thermal expansion material 24 is unable to foam successfully, or generates broken foams.

As shown in FIG. 4, the heating apparatus 2 heats the solid object 10, and the solid object 10 is expanded to form the 3D printed thermal expansion structure 20, wherein the 3D printed thermal expansion structure 20 and the solid object 10 have same configuration. The thermoplastic material 12 is in a range from 50 to 90 wt% based on a weight of the 3D printed thermal expansion structure 20; the thermal expansion material 14 is in range from 10 to 50 wt% based on the weight of the 3D printed thermal expansion structure 20. The solid object 10 is enlarged proportionally to form the 3D printed thermal expansion structure 20. As shown in FIG. 7 and FIG. 8, a volume of the 3D printed thermal expansion structure 20 is in a range from 1.2 to 2.5 times of a volume of the solid object 10. Once a volume change between the 3D printed thermal expansion structure 20 and the solid object 10 is less than 1.2 times, the volume change between the 3D printed thermal expansion structure 20 and the solid object 10 would be insignificant, so that a production efficiency of the 3D printed thermal expansion structure 20 would be bad. Once the volume change is over 2.5 times, the structure of the 3D printed thermal expansion structure 20 would become too loose, so that mechanical properties (physical properties) of the 3D printed thermal expansion structure 20 would not meet user's demands. According to the invention as defined by the claims, a volume of the thermal expansion material 24 in the 3D printed thermal expansion structure 20 is in a range from 1.2 to 2.5 times of the volume of the thermal expansion material 14 in the solid object 10.

After the solid object 10 is heated and expanded to form the 3D printed thermal expansion structure 20, the 3D printed thermal expansion structure 20 could be processed subsequently depending on the required demand, such as grinding, cutting, cleaning, painting, coating, and other subsequent processes, and also could be engaged or bonded with other objects to meet specific requirements.

According to the invention as defined by the claims, a heat deflection temperature (HDT) of the thermoplastic material 12 is lower than a heat expansion temperature of the thermal expansion material 14, 24. In the current embodiment, the HDT of the thermoplastic material 12 is listed as following table, but is not limited thereto.

| Types of the thermoplastic material 12 | Range of the suitable HDT (°C) |
|---|---|
| Epoxy | 80-100 |
| Acrylic acid | 85-105 |
| Thermoplastic Polyurethane (TPU) | 60-100 |
| Polyamide (PA) | 160-180 |
| Polypropylene (PP) | 60-105 |
| Polycarbonate (PC) | 131-138 |
| Acrylonitrile Butadiene Styrene (ABS) | 84-95 |

With the aforementioned design, the 3D printing apparatus is used to print the solid object by the mixed material that is a mixture of the thermoplastic material and the thermal expansion material, and then through the heating process, the solid object becomes the 3D printed thermal expansion structure. As a result, the 3D printing apparatus could be utilized to produce products with relatively complicated structure, and the heating process is utilized then to proportionally expand the solid object to form the 3D printed thermal expansion structure, thereby to shorten a manufacturing time of creating the 3D printed thermal expansion structure. The method according to present invention not only could retain the advantage of the 3D printing technology, which is capable of producing the product with the relatively complicated structure, but also could significantly shorten the manufacturing time of mass production via the 3D printing.

It must be pointed out that the embodiment described above is only a preferred embodiment of the present invention. All equivalent methods and structures defined within the appended claims should fall within the scope of the present invention.

## Claims

1. A 3D printed thermal expansion structure (20), comprising:
a thermoplastic material (12) which is in a range from 50 to 90 wt% based on a weight of the 3D printed thermal expansion structure (20); and
a thermal expansion material (14) which is in a range from 10 to 50 wt% based on the weight of the 3D printed thermal expansion structure (20);
wherein, the thermoplastic material (12) and the thermal expansion material (14) are mixed to form a mixed material, and the mixed material is utilized by a 3D printing apparatus (1) to form a solid object (10), and the solid object (10) is heated to expand to form the 3D printed thermal expansion structure (20);
wherein a volume of the 3D printed thermal expansion structure (20) is 1.2-2.5 times of a volume of the solid object (10);
wherein a heat deflection temperature (HDT) of the thermoplastic material (12) is lower than a heat expansion temperature of the thermal expansion material (14, 24);
wherein the solid object (10) is enlarged proportionally to form the 3D printed thermal expansion structure (20), and the 3D printed thermal expansion structure (20) and the solid object (10) have a same configuration.

2. The 3D printed thermal expansion structure (20) of claim 1, wherein the thermoplastic material (12) is selected from the group consisting of epoxy, acrylic acid, thermoplastic polyurethane (TPU), polyamide (PA), polypropylene (PP), polycarbonate (PC), and acrylonitrile butadiene styrene (ABS).

3. The 3D printed thermal expansion structure (20) of claim 1, wherein the thermoplastic material (12) is in liquid or in powder form.

4. The 3D printed thermal expansion structure (20) of claim 3, wherein when the thermoplastic material (12) is in powder form, the thermoplastic material (12) is blended with a binder in advance, and then is mixed with the thermal expansion material (14).

5. The 3D printed thermal expansion structure (20) of claim 1, wherein the thermal expansion material (14) comprises a closed-cell foam material, and the closed-cell foam material comprises a plurality of foamable microcapsules.

6. The 3D printed thermal expansion structure (20) of claim 1, wherein the thermal expansion material (14) is formed by pre-foaming a foamable raw material.

7. The 3D printed thermal expansion structure (20) of claim 6, wherein a volume of the thermal expansion material (14) is 10-40 times of a volume of the foamable raw material.

8. A manufacturing method of a 3D printed thermal expansion structure (20), comprising:
providing a mixed material;
utilizing a 3D printing apparatus (1) to form the mixed material into a solid object (10); and
heating the solid object (10) to make the solid object (10) expand to form the 3D printed thermal expansion structure (20); the solid object (10) is enlarged proportionally to form the 3D printed thermal expansion structure (20);
wherein, the 3D printed thermal expansion structure (20) and the solid object (10) have a same configuration;
wherein a volume of the 3D printed thermal expansion structure (20) is 1.2-2.5 times of a volume of the solid object (10);
wherein the mixed material comprises a thermoplastic material (12) and a thermal expansion material (14); the thermoplastic material (12) is in a range from 50 to 90 wt% based on a weight of the mixed material; the thermal expansion material (14) is in a range from 10 to 50 wt% based on the weight of the mixed material;
wherein a heat deflection temperature (HDT) of the thermoplastic material (12) is lower than a heat expansion temperature of the thermal expansion material (14, 24).

9. The manufacturing method of claim 8, wherein the thermal expansion material (14) is formed by pre-foaming a foamable raw material.

10. The manufacturing method of claim 9, wherein a volume of the thermal expansion material (14) is 10-40 times of a volume of the foamable raw material.

## Patentansprüche

1. 3D-gedruckte Thermische-Ausdehnung-Struktur (20), aufweisend:
ein thermoplastisches Material (12), welches in einem Bereich von 50 bis 90 Gew.-% liegt, bezogen auf ein Gewicht der 3D-gedruckten Thermische-Ausdehnung-Struktur (20); und
ein Thermische-Ausdehnung-Material (14), welches in einem Bereich von 10 bis 50 Gew.-% liegt, bezogen auf das Gewicht der 3D-gedruckten Thermische-Ausdehnung-Struktur (20);
wobei das thermoplastische Material (12) und das Thermische-Ausdehnung-Material (14) gemischt sind, um ein gemischtes Material zu bilden, und wobei das gemischte Material von einer 3D-Druck-Vorrichtung (1) verwendet wird, um ein Festkörper-Objekt (10) zu bilden, und wobei das Festkörper-Objekt (10) erwärmt wird, um sich auszudehnen, um die 3D-gedruckte Thermische-Ausdehnung-Struktur (20) zu bilden;
wobei ein Volumen der 3D-gedruckten Thermische-Ausdehnung-Struktur (20) ein 1,2-2,5-faches von einem Volumen des Festkörper-Objekt (10) ist;
wobei eine Wärmeformbeständigkeitstemperatur (HDT) des thermoplastischen Materials (12) geringer ist als eine Wärmeausdehnungstemperatur des Thermische-Ausdehnung-Materials (14, 24);
wobei das Festkörper-Objekt (10) proportional vergrößert ist, um die 3D-gedruckte Thermische-Ausdehnung-Struktur (20) zu bilden, und die 3D-gedruckte Thermische-Ausdehnung-Struktur (20) und das Festkörper-Objekt (10) eine gleiche Konfiguration haben.

2. 3D-gedruckte Thermische-Ausdehnung-Struktur (20) gemäß Anspruch 1, wobei das thermoplastische Material (12) von der Gruppe ausgewählt ist, welche aus Epoxid, Acrylsäure, thermoplastischem Polyurethan (TPU), Polyamid (PA), Polypropylen (PP), Polycarbonat (PC) und Acrylnitril-Butadien-Styrol (ABS) besteht.

3. 3D-gedruckte Thermische-Ausdehnung-Struktur (20) gemäß Anspruch 1, wobei das thermoplastische Material (12) in flüssiger Form oder in Pulverform vorliegt.

4. 3D-gedruckte Thermische-Ausdehnung-Struktur (20) gemäß Anspruch 3, wobei, wenn das thermoplastische Material (12) in Pulverform vorliegt, das thermoplastische Material (12) im Voraus mit einem Bindemittel vermengt wird, und dann mit dem Thermische-Ausdehnung-Material (14) gemischt wird.

5. 3D-gedruckte Thermische-Ausdehnung-Struktur (20) gemäß Anspruch 1, wobei das Thermische-Ausdehnung-Material (14) ein Geschlossenzelliger-Schaum-Material aufweist, und wobei das Geschlossenzellige-Schaum-Material eine Vielzahl von schäumbaren Mikrokapseln aufweist.

6. 3D-gedruckte Thermische-Ausdehnung-Struktur (20) gemäß Anspruch 1, wobei das Thermische-Ausdehnung-Material (14) mittels Vorschäumens eines schäumbaren Rohmaterials gebildet ist.

7. 3D-gedruckte Thermische-Ausdehnung-Struktur (20) gemäß Anspruch 6, wobei ein Volumen des Thermische-Ausdehnung-Materials (14) das 10-40-fache von einem Volumen des schäumbaren Rohmaterials ist.

8. Herstellungsverfahren einer 3D-gedruckten Thermische-Ausdehnung-Struktur (20), aufweisend:
Bereitstellen eines gemischten Materials;
Verwenden einer 3D-Druck-Vorrichtung (1), um das gemischte Material zu einem Festkörper-Objekt (10) zu formen; und
Erwärmen des Festkörper-Objekts (10), um das Festkörper-Objekt (10) dazu zu veranlassen, sich auszudehnen, um die 3D-gedruckte Thermische-Ausdehnung-Struktur (20) zu bilden; wobei das Festkörper-Objekt (10) proportional vergrößert ist, um die 3D-gedruckte Thermische-Ausdehnung-Struktur (20) zu bilden;
wobei die 3D-gedruckte Thermische-Ausdehnung-Struktur (20) und das Festkörper-Objekt (10) eine gleiche Konfiguration haben;
wobei ein Volumen der 3D-gedruckten Thermische-Ausdehnung-Struktur (20) ein 1,2-2,5-faches eines Volumens des Festkörper-Objekts (10) ist;
wobei das gemischte Material ein thermoplastisches Material (12) und ein Thermische-Ausdehnung-Material (14) aufweist; wobei das thermoplastische Material (12) in einem Bereich von 50 bis 90 Gew.-% liegt, bezogen auf ein Gewicht des gemischten Materials; wobei das Thermische-Ausdehnung-Material (14) in einem Bereich von 10 bis 50 Gew.-% liegt, bezogen auf das Gewicht des gemischten Materials;
wobei eine Wärmeformbeständigkeitstemperatur (HDT) des thermoplastischen Materials (12) geringer ist als eine Wärmeausdehnungstemperatur des Thermische-Ausdehnung-Materials (14, 24).

9. Herstellungsverfahren gemäß Anspruch 8, wobei das Thermische-Ausdehnung-Material (14) mittels Vorschäumens eines schäumbaren Rohmaterials gebildet wird.

10. Herstellungsverfahren gemäß Anspruch 9, wobei ein Volumen des Thermische-Ausdehnung-Materials (14) ein 10-40-faches eines Volumens des schäumbaren Rohmaterials ist.

## Revendications

1. Structure d'expansion thermique imprimée en 3D (20), comprenant :
un matériau thermoplastique (12) qui est dans une plage de 50 à 90 % en poids sur la base d'un poids de la structure d'expansion thermique imprimée en 3D (20) ; et
un matériau d'expansion thermique (14) qui est dans une plage de 10 à 50 % en poids sur la base du poids de la structure d'expansion thermique imprimée en 3D (20) ;
dans laquelle le matériau thermoplastique (12) et le matériau d'expansion thermique (14) sont mélangés pour former un matériau mélangé, et le matériau mélangé est utilisé par un appareil d'impression 3D (1) pour former un objet solide (10), et l'objet solide (10) est chauffé pour se dilater pour former la structure d'expansion thermique imprimée en 3D (20) ;
dans laquelle un volume de la structure d'expansion thermique imprimée en 3D (20) est de 1,2 à 2,5 fois un volume de l'objet solide (10) ;
dans laquelle une température de fléchissement sous charge (TFC) du matériau thermoplastique (12) est inférieure à une température d'expansion thermique du matériau d'expansion thermique (14, 24) ;
dans laquelle l'objet solide (10) est agrandi proportionnellement pour former la structure d'expansion thermique imprimée en 3D (20), et la structure d'expansion thermique imprimée en 3D (20) et l'objet solide (10) ont une même configuration.

2. Structure d'expansion thermique imprimée en 3D (20) selon la revendication 1, dans laquelle le matériau thermoplastique (12) est choisi dans le groupe constitué d'époxy, d'acide acrylique, de polyuréthane thermoplastique (TPU), de polyamide (PA), de polypropylène (PP), de polycarbonate (PC), et d'acrylonitrile butadiène styrène (ABS) .

3. Structure d'expansion thermique imprimée en 3D (20) selon la revendication 1, dans laquelle le matériau thermoplastique (12) est sous forme liquide ou sous forme de poudre.

4. Structure d'expansion thermique imprimée en 3D (20) selon la revendication 3, dans laquelle, lorsque le matériau thermoplastique (12) est sous forme de poudre, le matériau thermoplastique (12) est mélangé avec un liant au préalable, puis est mélangé avec le matériau d'expansion thermique (14).

5. Structure d'expansion thermique imprimée en 3D (20) selon la revendication 1, dans laquelle le matériau d'expansion thermique (14) comprend un matériau en mousse à cellules fermées, et le matériau en mousse à cellules fermées comprend une pluralité de microcapsules moussables.

6. Structure d'expansion thermique imprimée en 3D (20) selon la revendication 1, dans laquelle le matériau d'expansion thermique (14) est formé par pré-moussage d'une matière première moussable.

7. Structure d'expansion thermique imprimée en 3D (20) selon la revendication 6, dans laquelle un volume du matériau d'expansion thermique (14) est de 10 à 40 fois un volume de la matière première moussable.

8. Procédé de fabrication d'une structure d'expansion thermique imprimée en 3D (20), comprenant :
la fourniture d'un matériau mélangé ;
l'utilisation d'un appareil d'impression 3D (1) pour former le matériau mélangé en un objet solide (10) ; et
le chauffage de l'objet solide (10) pour qu'il se dilate pour former la structure d'expansion thermique imprimée en 3D (20) ; l'objet solide (10) est agrandi proportionnellement pour former la structure d'expansion thermique imprimée en 3D (20) ;
dans lequel la structure d'expansion thermique imprimée en 3D (20) et l'objet solide (10) ont une même configuration ;
dans lequel un volume de la structure d'expansion thermique imprimée en 3D (20) est de 1,2 à 2,5 fois un volume de l'objet solide (10) ;
dans lequel le matériau mélangé comprend un matériau thermoplastique (12) et un matériau d'expansion thermique (14) ; le matériau thermoplastique (12) est dans une plage de 50 à 90 % en poids sur la base d'un poids du matériau mélangé ; le matériau d'expansion thermique (14) est dans une plage de 10 à 50 % en poids sur la base du poids du matériau mélangé ;
dans lequel une température de fléchissement sous charge (TFC) du matériau thermoplastique (12) est inférieure à une température d'expansion thermique du matériau d'expansion thermique (14, 24).

9. Procédé de fabrication selon la revendication 8, dans lequel le matériau d'expansion thermique (14) est formé par pré-moussage d'une matière première moussable.

10. Procédé de fabrication selon la revendication 9, dans lequel un volume du matériau d'expansion thermique (14) est de 10 à 40 fois un volume de la matière première moussable.
